# EUROPÄISCHE PATENTSCHRIFT

(11) **EP 3 373 388 B1**
(45) Veröffentlichungstag und Bekanntmachung des Hinweises auf die Patenterteilung: **24.06.2020**
(21) Anmeldenummer: 17159690.1
(22) Anmeldetag: 07.03.2017
(51) Int. Cl.: H01Q 1/22, G01N 22/00, H01Q 19/09, H01Q 19/26, H01Q 1/42, H01Q 9/32

(54) **SENDE-ANTENNENANORDNUNG FÜR BEHÄLTERSONDEN UND/ODER ROHRLEITERSONDEN, BEHÄLTERSONDE ODER ROHRLEITERSONDE UND MESSGERÄT**
TRANSMISSION ANTENNA ASSEMBLY FOR CONTAINER PROBES AND/OR PIPE CONDUCTOR PROBES, CONTAINER PROBE OR PIPE CONDUCTOR PROBE AND MEASURING DEVICE
SYSTÈME D'ANTENNE D'ÉMISSION POUR SONDES DE RÉCIPIENT ET/OU SONDE DE CONDUITES, SONDE DE RÉCIPIENT OU SONDE DE CONDUITE ET APPAREIL DE MESURE

(43) Veröffentlichungstag der Anmeldung: 12.09.2018
(73) Patentinhaber: Berthold Technologies GmbH & Co. KG, 75323 Bad Wildbad (DE)
(72) Erfinder: El Korch, Rachid, 75328 Schömberg (DE); Hirsch, Stephan, 68199 Mannheim (DE); Klute, Ulrich, 33129 Delbrück (DE)
(74) Vertreter: Patentanwälte Ruff, Wilhelm, Beier, Dauster & Partner mbB

(56) Entgegenhaltungen:
- JP-A- 2002 246 836
- US-A1- 2002 118 140
- US-A1- 2016 081 743
- Berthold Technologies: "Micro-Polar Brix(TM) LB 565 concentration dry subsaance- Brix-content", , 31. August 2010 (2010-08-31), XP055402730, Gefunden im Internet: URL:https://web.archive.org/web/2015061921 1050if_/https://www.berthold.com/en/system /asset/lb565_e.pdf [gefunden am 2017-08-31]

## Beschreibung

Die Erfindung betrifft eine Behältersonde oder Rohrleitersonde und ein Messgerät.

Die US 2016/0081743 A1 zeigt ein elektrochirurgisches Instrument.

Die JP 2002/246836 A zeigt eine Antenne für ein Radio-LAN.

Die US 2002/0118140 A1 zeigt ein Antennensystem mit einem Sender, einem halbzylindrischen Subreflektor und einem Hauptreflektor, die derart angeordnet sind, dass Spiegelflächen des Hauptreflektors und des Subreflektors in Richtung des Senders ausgerichtet sind, wobei der Sender, der Subreflektor und der Hauptreflektor gemeinsam auf einer Grundplatte angeordnet sind.

Das Datenblatt Berthold Technologies: "Micro-Polar Brix™ LB 565 concentration dry substance- Brix-content", 31. August 2010, XP055402730, Gefunden im Internet: URL:https://web.archive.org/web/20150619211050if_/https://www.berthold.com/en/system/asse t/lb565_e.pdf [gefunden am 2017-08-31] zeigt eine Behältersonde oder Rohrleitungssonde.

Der Erfindung liegt die Aufgabe zugrunde, eine Behältersonde oder Rohrleitersonde und ein Messgerät zur Verfügung zu stellen, die einfach, möglichst robust und servicefreundlich aufgebaut sind.

Der Erfindung löst diese Aufgabe durch eine Behältersonde oder Rohrleitersonde nach Anspruch 1 und ein Messgerät nach Anspruch 7.

Die erfindungsgemäße Behältersonde oder Rohrleitersonde weist eine Sende-Antennenanordnung auf und eine, beispielswiese herkömmliche, Empfangs-Antennenanordnung auf, die von der Sende-Antennenanordnung um einen definierten Abstand beabstandet ist und die dazu ausgebildet ist, mittels der Sende-Antennenanordnung erzeugte Signale zu empfangen. Der definierte Abstand kann beispielsweise zwischen 50 mm und 66 mm liegen. Der definierte Abstand kann beispielsweise 58 mm betragen.

Die Sende-Antennenanordnung der Behältersonde und/oder Rohrleitersonde weist einen koaxialen Wellenleiter auf, der herkömmlich einen Innenleiter und einen Mantelleiter aufweist. Insoweit sei auch die einschlägige Fachliteratur verwiesen. Der Mantelleiter ist an einem Sendeende des koaxialen Wellenleiters über eine vorgegebene Länge entfernt ist, so dass der Innenleiter frei liegt und einen Monopol bildet. Mit anderen Worten erfolgt die elektromagnetische Abstrahlung über einen Monopolstrahler. Die vorgegebene Länge, über die der Mantelleiter entfernt ist, hängt von einer Nutzfrequenz und einem Medium ab, in das der Monopol und der Reflektor eingebettet sind, d.h. in das die Behältersonde eingesetzt ist. Die vorgegebene Länge des Monopols ist Lambda/8. Die vorgegebene Länge kann beispielsweise in einem Längenbereich zwischen 8 mm und 20 mm liegen. Die vorgegebene Länge kann beispielsweise 14 mm betragen.

Die Sende-Antennenanordnung weist weiter einen Reflektor auf, der dazu ausgebildet ist, von dem Monopol erzeugte Signale bzw. elektromagnetische Wellen zu reflektieren. Der Monopol und der Reflektor verlaufen bzw. erstrecken sich parallel. Ein Abstand zwischen Monopol und Reflektor ist abhängig von der Nutzfrequenz und dem Medium, in das der Monopol und der Reflektor eingebettet sind. Dieser Abstand beträgt vorzugsweise Lambda/8. Der Abstand kann beispielsweise in einem Abstandsbereich zwischen 4 mm und 16 mm liegen. Der Abstand kann beispielsweise 10 mm betragen.

In einer Ausführungsform verlaufen ein Endabschnitt des koaxialen Wellenleiters, an den sich der Monopol anschließt, und der Reflektor über eine vorgegebene Länge parallel. Eine Länge des Parallellaufs ist beispielsweise abhängig von einem gewählten Dielektrikum, siehe hierzu auch die nachfolgenden Ausführungen. Die Länge des Parallellaufs kann beispielsweise in einem Bereich zwischen 3 mm und 15 mm liegen. Die Länge des Parallellaufs kann beispielsweise 9 mm betragen.

In einer Ausführungsform weist die Sende-Antennenanordnung ein Dielektrikum auf, wobei das Dielektrikum den Endabschnitt und den Monopol umgibt und der Reflektor das Dielektrikum an zumindest einer Seite begrenzt.

In einer Ausführungsform weist die Sende-Antennenanordnung einen mechanischen Träger auf, wobei das Dielektrikum und der Reflektor an den Träger angrenzen bzw. auf diesem aufsitzen und der der Wellenleiter durch den Träger bzw. eine Bohrung des Trägers hindurch geführt ist.

In einer Ausführungsform weist die Sende-Antennenanordnung ein kappenförmiges Gehäuse auf, wobei der Monopol, der Reflektor, das Dielektrikum und der Träger in dem Gehäuse angeordnet sind bzw. von dem Gehäuse umschlossen sind. Das Gehäuse bzw. die Kappe kann zur Anpassung der Antenne und, gegebenenfalls unter Verwendung einer Dichtung, zum Schutz vor Eindringen von Flüssigkeiten und Staub dienen. Eine Anpassung der Antenne kann beispielswiese dadurch erzielt werden, dass man ein Gehäusematerial bzw. Kappenmaterial geeignet auswählt. Beispielsweise kann das Gehäusematerial bzw. Kappenmaterial bei Flüssigkeitsmessungen anders gewählt sein als bei Feststoffmessungen. Das Gehäuse kann fest als auch austauschbar gestaltet sein. Das Innere des Gehäuses kann mit Vergussmasse verfüllt sein.

In einer Ausführungsform weist die Sende-Antennenanordnung eine Dichtung auf, die umlaufend zwischen dem Träger und dem Gehäuse angeordnet ist.

Das erfindungsgemäße Messgerät weist eine Behältersonde oder Rohrleitersonde auf. Weiter weist das Messgerät einen Signalgenerator auf, der dazu ausgebildet ist, den koaxialen Wellenleiter der Sende-Antennenanordnung an einem Einspeiseende mit einem Erregersignal geeigneter Frequenz und Amplitude zu beaufschlagen. Das erfindungsgemäße Messgerät weist weiter eine Signalauswerteeinheit auf, die dazu ausgebildet ist, mittels der Empfangs-Antennenanordnung empfangene Signale zur Bestimmung der Messgröße auszuwerten. Insoweit sei auch auf die einschlägige Fachliteratur verwiesen.

Die Erfindung wird nachfolgend unter Bezugnahme auf die Zeichnungen detailliert beschrieben. Hierbei zeigen:
- Fig. 1: ein schematisches Schnittbild einer Sende-Antennenanordnung für Behältersonden und/oder Rohrleitersonden und
- Fig. 2: ein Messgerät mit einer Behältersonde oder Rohrleitersonde, die eine in Fig. 1 gezeigte Sende-Antennenanordnung aufweist.

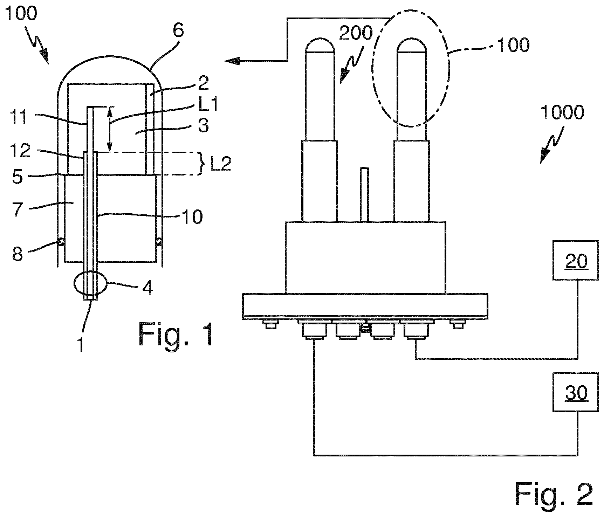

Fig. 1 zeigt ein schematisches Schnittbild einer Sende-Antennenanordnung 100 für Behältersonden und/oder Rohrleitersonden.

Die Sende-Antennenanordnung 100 weist einen koaxialen Wellenleiter 4 auf, der einen Innenleiter 1 und einen Mantelleiter 10 aufweist, wobei der Mantelleiter 10 an einem Sendeende des koaxialen Wellenleiters 4 über eine Länge L1 entfernt ist, so dass der Innenleiter 1 frei liegt und einen Monopol 11 bildet.

Die Sende-Antennenanordnung 100 weist weiter einen Reflektor 2 auf, der dazu ausgebildet ist, von dem Monopol erzeugte elektromagnetische Strahlung zu reflektieren, wobei der Monopol 11 und der Reflektor 2 parallel verlaufen bzw. in zueinander parallelen Ebenen liegen. Der Reflektor 2 ist an einer Kontaktstelle bzw. Kontaktfläche 5 geerdet. Eine gewünschte Bündelung der abgestrahlten Strahlung wird mittels des geerdeten Reflektors2 erzielt.

Ein Endabschnitt 12 des koaxialen Wellenleiters 4, an den sich der Monopol 11 anschließt, und der Reflektor 2 verlaufen über eine Länge L2 parallel.

Die Sende-Antennenanordnung 100 weist weiter ein Dielektrikum 3 auf, wobei das Dielektrikum 3 den Endabschnitt 12 und den Monopol 11 umgibt und der Reflektor 2 das Dielektrikum 3 an einer Seite begrenzt.

Die Sende-Antennenanordnung 100 weist einen mechanischen Träger 7 auf, wobei das Dielektrikum 3 und der Reflektor 2 auf dem Träger 7 aufsitzen und der der Wellenleiter 4 durch den Träger 7 hindurch geführt ist.

Die Sende-Antennenanordnung 100 wiest weiter ein kappenförmiges Gehäuse 6 auf, wobei der Monopol 11, der Reflektor 2, das Dielektrikum 3 und der Träger 7 in dem Gehäuse 6 angeordnet sind.

Die Sende-Antennenanordnung 100 weist weiter eine Dichtung 8 auf, die umlaufend zwischen dem Träger 7 und dem Gehäuse 6 angeordnet ist und die das Gehäuseinnere von der Umgebung staubdicht und fluiddicht abschließt.

Fig. 2. zeigt ein Messgerät mit einer Behältersonde oder Rohrleitersonde 1000, die die in Fig. 1 gezeigte Sende-Antennenanordnung 100 aufweist.

Die Behältersonde oder Rohrleitersonde 1000 weist weiter eine herkömmliche Empfangs-Antennenanordnung 200 auf, die von der Sende-Antennenanordnung 100 beabstandet ist und die dazu ausgebildet ist, mittels der Sende-Antennenanordnung 100 erzeugte elektromagnetische Wellen zu empfangen.

Das Messgerät weist einen herkömmlichen Signalgenerator 20 auf, der dazu ausgebildet ist, den koaxialen Wellenleiter 4 der Sende-Antennenanordnung 100 an einem Einspeiseende mit einem Erregersignal, beispielsweise in Form eines Erregerstroms oder einer Erregerspannung mit definierter Frequenz und/oder Amplitude, zu beaufschlagen.

Das Messgerät weist weiter eine herkömmliche Signalauswerteeinheit 30 auf, die dazu ausgebildet ist, mittels der Empfangs-Antennenanordnung 200 empfangene Signale zur Bestimmung einer Messgröße, beispielsweise in Form eines Füllstandes, einer Dichte, Feuchtigkeit, usw., auszuwerten. Insoweit sei auch auf die einschlägige Fachliteratur verwiesen.

Die Sende-Antennenanordnung 100 ist bevorzugt frei von Lötstellen, so dass kein Lötstellenbruch mehr auftreten kann.

Der Aufbau der Sende-Antennenanordnung 100 ist sehr einfach und robust.

Die Sende-Antennenanordnung 100 weist ein austauschbares Gehäuse bzw. eine austauschbare Kappe 6 auf. Der Austausch des Gehäuses 6 als Verschleißteil ist kostengünstig und kann vor Ort durchgeführt werden.

Die Sende-Antennenanordnung 100 weist aufgrund ihres Layouts einen hohen Antennengewinn auf, wodurch sich die Dynamik und die Messgenauigkeit erhöhen.

Weiter weist die Sende-Antennenanordnung 100 eine verringerte Störanfälligkeit für HF-Reflektionen auf.

Die Sende-Antennenanordnung 100 ist derart geometrisch dimensioniert, dass sie in einer Rohrleitung platzsparend untergebracht werden kann.

## Patentansprüche

1. Behältersonde oder Rohrleitersonde (1000), aufweisend:
eine Sende-Antennenanordnung (100) aufweisend:
- einen koaxialen Wellenleiter (4), der einen Innenleiter (1) und einen Mantelleiter (10) aufweist, wobei der Mantelleiter (10) an einem Ende des koaxialen Wellenleiters (4) über eine Länge (L1) entfernt ist, so dass der Innenleiter (1) frei liegt und einen Monopol (11) bildet, wobei die Länge des Monopols Lambda/8 beträgt, und
- einen Reflektor (2), der dazu ausgebildet ist, von dem Monopol (11) erzeugte Signale zu reflektieren, wobei der Monopol (11) und der Reflektor (2) parallel verlaufen, und
- eine Empfangs-Antennenanordnung (200), die von der Sende-Antennenanordnung (100) beabstandet ist und die dazu ausgebildet ist, mittels der Sende-Antennenanordnung (100) erzeugte Signale zu empfangen.

2. Behältersonde oder Rohrleitersonde (1000) nach Anspruch 1, **dadurch gekennzeichnet, dass**
- ein Endabschnitt (12) des koaxialen Wellenleiters (4), an den sich der Monopol (11) anschließt, und der Reflektor (2) über eine Länge (L2) parallel verlaufen.

3. Behältersonde oder Rohrleitersonde (1000) nach Anspruch 2, **dadurch gekennzeichnet, dass**
- die Sende-Antennenanordnung (100) ein Dielektrikum (3) aufweist, wobei das Dielektrikum (3) den Endabschnitt (12) und den Monopol (11) umgibt und der Reflektor (2) das Dielektrikum (3) an zumindest einer Seite begrenzt.

4. Behältersonde oder Rohrleitersonde (1000) nach Anspruch 3, **dadurch gekennzeichnet, dass**
- die Sende-Antennenanordnung (100) einen Träger (7) aufweist, wobei das Dielektrikum (3) und der Reflektor (2) an den Träger angrenzen und der der Wellenleiter (4) durch den Träger (7) hindurch geführt ist.

5. Behältersonde oder Rohrleitersonde (1000) nach Anspruch 4, **dadurch gekennzeichnet, dass**
- die Sende-Antennenanordnung (100) ein kappenförmiges Gehäuse (6) aufweist, wobei der Monopol (11), der Reflektor (2), das Dielektrikum (3) und der Träger (7) in dem Gehäuse (6) angeordnet sind.

6. Behältersonde oder Rohrleitersonde (1000) nach Anspruch 5, **dadurch gekennzeichnet, dass**
- die Sende-Antennenanordnung (100) eine Dichtung (8) aufweist, die umlaufend zwischen dem Träger (7) und dem Gehäuse (6) angeordnet ist.

7. Messgerät, aufweisend:
- eine Behältersonde oder Rohrleitersonde (1000) nach einem der vorhergehenden Ansprüche,
- einen Signalgenerator (20), der dazu ausgebildet ist, den koaxialen Wellenleiter (4) der Sende-Antennenanordnung (100) mit einem Erregersignal zu beaufschlagen, und
- eine Signalauswerteeinheit (30), die dazu ausgebildet ist, mittels der Empfangs-Antennenanordnung (200) empfangene Signale zur Bestimmung einer Messgröße auszuwerten.

## Claims

1. Container probe or pipe conductor probe (1000), comprising:
- a transmission antenna assembly (100) comprising:
- a coaxial waveguide (4) having an inner conductor (1) and a sheath conductor (10), wherein the sheath conductor (10) is at a distance of a length (L1) on one end of the coaxial waveguide (4) such that the inner conductor (1) is exposed and provides a monopole (11), wherein the length of the monopole is lambda/8, and
- a reflector (2) which is arranged to reflect signals generated by the monopole (11), wherein the monopole (11) and the reflector (2) extend in parallel, and
- a receiving antenna assembly (200) which is spaced from the transmission antenna assembly (100) and arranged to receive signals generated by means of the transmission antenna assembly (100).

2. Container probe or pipe conductor probe (1000) according to claim 1, **characterized in that**
- an end section (12) of the coaxial waveguide (4) which is adjoined by the monopole (11) and the reflector (2) extend in parallel over a length (L2).

3. Container probe or pipe conductor probe (1000) according to claim 2, **characterized in that**
- the transmission antenna assembly (100) includes a dielectric (3), wherein the dielectric (3) surrounds the end section (12) and the monopole (11), and the reflector (2) delimits the dielectric (3) at least on one side.

4. Container probe or pipe conductor probe (1000) according to claim 3, **characterized in that**
- the transmission antenna assembly (100) includes a support (7), wherein the dielectric (3) and the reflector (2) are adjacent to the support and the waveguide (4) is passed through the support (7).

5. Container probe or pipe conductor probe (1000) according to claim 4, **characterized in that**
- the transmission antenna assembly (100) includes a cap-shaped housing (6), wherein the monopole (11), the reflector (2), the dielectric (3) and the support (7) are disposed within the housing (6).

6. Container probe or pipe conductor probe (1000) according to claim 5, **characterized in that**
- the transmission antenna assembly (100) includes a sealing (8) which is arranged circumferentially between the support (7) and the housing (6).

7. Measuring device, comprising:
- a container probe or pipe conductor probe (1000) according to any of the preceding claims,
- a signal generator (20) which is arranged to apply an exciter signal to the coaxial waveguide (4) of the transmission antenna assembly (100), and
- a signal evaluation unit (30) which is arranged to evaluate signals received by means of the receiving antenna assembly (200) for determination of a measured quantity.

## Revendications

1. Sonde à récipient ou sonde à conduite tubulaire (1000), comprenant :
- un arrangement d'antennes d'émission (100) comprenant :
- un guide d'ondes coaxial (4), lequel possède un conducteur interne (1) et un conducteur formant enveloppe (10), le conducteur formant enveloppe (10) étant retiré sur une longueur (L1) à une extrémité du guide d'ondes coaxial (4), de sorte que le conducteur interne (1) est exposé et forme un monopôle (11), la longueur du monopôle étant de Lambda/8, et
- un réflecteur (2) qui est configuré pour réfléchir les signaux générés par le monopôle (11), le monopôle (11) et le réflecteur (2) suivant un tracé parallèle, et
- un arrangement d'antennes de réception (200) qui est espacé de l'arrangement d'antennes d'émission (100) et qui est configuré pour recevoir les signaux générés par l'arrangement d'antennes d'émission (100).

2. Sonde à récipient ou sonde à conduite tubulaire (1000) selon la revendication 1, **caractérisée en ce que**
- une portion d'extrémité (12) du guide d'ondes coaxial (4), à laquelle se raccorde le monopôle (11), et le réflecteur (2) suivent un tracé parallèle sur une longueur (L2).

3. Sonde à récipient ou sonde à conduite tubulaire (1000) selon la revendication 2, **caractérisée en ce que**
- l'arrangement d'antennes d'émission (100) possède un diélectrique (3), le diélectrique (3) entourant la portion d'extrémité (12) et le monopôle (11) et le réflecteur (2) délimitant le diélectrique (3) sur au moins un côté.

4. Sonde à récipient ou sonde à conduite tubulaire (1000) selon la revendication 3, **caractérisée en ce que**
- l'arrangement d'antennes d'émission (100) possède un élément porteur (7), le diélectrique (3) et le réflecteur (2) étant adjacents de l'élément porteur (7) et le guide d'ondes (4) passant à travers l'élément porteur (7).

5. Sonde à récipient ou sonde à conduite tubulaire (1000) selon la revendication 4, **caractérisée en ce que**
- l'arrangement d'antennes d'émission (100) possède un boîtier (6) en forme de calotte, le monopôle (11), le réflecteur (2), le diélectrique (3) et l'élément porteur (7) étant disposés dans le boîtier (6).

6. Sonde à récipient ou sonde à conduite tubulaire (1000) selon la revendication 5, **caractérisée en ce que**
- l'arrangement d'antennes d'émission (100) possède une garniture d'étanchéité (8) qui est disposée circonférentiellement entre l'élément porteur (7) et le boîtier (6).

7. Appareil de mesure comprenant :
- une sonde à récipient ou sonde à conduite tubulaire (1000) selon l'une des revendications précédentes,
- un générateur de signaux (20) qui est configuré pour alimenter le guide d'ondes coaxial (4) de l'arrangement d'antennes d'émission (100) avec un signal d'excitation et
- une unité d'interprétation de signal (30) qui est configurée pour interpréter les signaux reçus au moyen de l'arrangement d'antennes de réception (200) en vue de déterminer une grandeur de mesure.
